# FASCICULE DE BREVET EUROPEEN

(11) **EP 1 368 784 B1**
(45) Date de publication et mention de la délivrance du brevet: **11.05.2005**
(21) Numéro de dépôt: 02706857.6
(22) Date de dépôt: 14.02.2002
(51) Int. Cl.: G06K 19/07, G06K 7/10

(54) **CARTE A PUCE SANS CONTACT A ADAPTATION DE SIGNAUX DE COMMANDE**
KONTAKTLOSE KARTE MIT KOMMANDOPROTOKOLLUMSETZUNG
CONTROL SIGNAL-ADAPTIVE CONTACTLESS CHIP CARD

(30) Priorité: 13.03.2001 FR 0103401
(43) Date de publication de la demande: 10.12.2003
(73) Titulaire: STMicroelectronics S.A., 92120 Montrouge (FR)
(72) Inventeur: PALMADE, Romain, F-13390 Auriol (FR)
(74) Mandataire: Bentz, Jean-Paul
(86) Numéro de dépôt international: PCT/FR2002/000573
(87) Numéro de publication internationale: WO 2002/073522

(56) Documents cités:
- EP-A- 0 971 305
- EP-A- 1 003 125
- DE-C- 4 406 704
- US-A- 5 206 495
- US-A- 6 045 043

## Description

L'invention concerne un nouveau type de carte à puce électronique du type sans contact mais qui fonctionne selon un système d'exploitation d'une carte avec contacts. Elle concerne également un lecteur de telles cartes à puce sans contact.

Il existe deux catégories de cartes à puce électronique selon qu'elles possèdent ou non des contacts électriques en vue de leur liaison avec un lecteur de carte.

Les cartes à puce électronique avec contacts, actuellement les plus utilisées, fonctionnent selon des systèmes d'exploitation de carte et communiquent avec le lecteur, selon des protocoles de communication, ces systèmes et protocoles étant normalisés. Notamment, elles communiquent avec le lecteur de carte selon la norme ISO 7816-4.

Les cartes à puce électronique sans contact, d'usage moins répandu que les précédentes, communiquent avec le lecteur de carte selon la norme ISO 14443-4 qui est différente de la norme ISO 7816-4 sur de nombreux aspects.

Il en résulte que l'utilisateur de cartes à puce électronique sans contact doit développer un système d'exploitation spécifique adapté à la norme ISO 14443-4 pour réaliser les mêmes fonctionnalités que celles de la carte à puce avec contacts.

Inversement, l'utilisateur de carte à puce électronique avec contacts ne peut mettre en oeuvre le système d'exploitation d'une carte à puce sans contact sans le modifier pour tenir compte des spécificités de la norme ISO 14443-4.

Le document de brevet US 6,045,043 décrit une carte à puce électronique qui présente à la fois des contacts pour une communication par conducteurs et une antenne pour communication sans contact. Cette carte est ainsi capable d'échanger sélectivement des données avec un lecteur de carte par l'intermédiaire des contacts ou par l'intermédiaire de l'antenne. Pour ce faire, un dispositif de commutation est couplé soit aux contacts, soit à l'antenne, et à un microprocesseur doté d'un système d'exploitation communiquant selon la norme ISO 7816 pour la transmission de données « avec contacts », qui peut donc également être mis en oeuvre dans le cadre de la transmission de données « sans contact ». Ce document montre donc une conversion contact/sans contact, cependant, aucune norme pour la communication sans contact n'est mentionnée.

Un but de la présente invention est donc de réaliser une carte à puce électronique sans contact qui met en oeuvre le système d'exploitation d'une carte avec contacts mais qui communique avec un lecteur de carte sans contact selon un protocole de communication classique défini par la norme ISO 14443-4.

Ce but est atteint en réalisant une carte à puce électronique sans contact caractérisé en ce qu'elle comprend :
- un dispositif de communication avec un lecteur de carte à puce électronique sans contact communiquant selon la norme ISO 14443-4, et
- un système d'exploitation du type carte à puce électronique avec contacts communiquant par commande ADPU et réponse ADPU selon la norme ISO 7816-4,
- une interface de conversion de protocole entre le dispositif de communication et le système d'exploitation.

Le terme APDU est un acronyme de l'expression anglo-saxonne « Application Protocol Data Unit » signifiant « unité de données du protocole d'application ».

Les messages de commande APDU et de réponse APDU selon la norme ISO 7816-4 étant transmis entre le dispositif de communication et le lecteur selon un format de commande I-Block de la norme ISO 14443-4, la commande APDU ou la réponse APDU constituant la zone de données (INF) de la commande I-Block.

L'interface de conversion de protocole est de préférence sous forme logicielle, le contrôle étant exercé par le dispositif de communication ou le système d'exploitation.

L'invention concerne également un lecteur de cartes à puce électronique sans contact telles que définies ci-dessus, caractérisé en ce qu'il comprend :
- un dispositif de communication avec une pluralité de cartes à puce sans contact fonctionnant selon la norme ISO 14443-4 en tant que lecteur,
- un système d'exploitation pour carte à puce électronique avec contacts en tant que lecteur, et
- une interface de conversion de protocole entre le dispositif de communication lecteur et le système d'exploitation lecteur pour établir une communication selon la norme ISO 7816-4.

Les messages de commande APDU et de réponse APDU selon la norme ISO 7816-4 étant transmis entre le dispositif de communication et les cartes à puces selon un format de commande I-Block de la norme ISO 14443-4, la commande APDU ou la réponse APDU constituant la zone de données (INF) de la commande I-Block.

L'interface de conversion de protocole du lecteur est de préférence sous forme logicielle sous le contrôle soit du dispositif de communication du lecteur, soit du système d'exploitation du lecteur.

Ce système d'exploitation du lecteur comprend des moyens pour traiter plusieurs cartes à puce électronique ci-dessus définies.

D'autres caractéristiques et avantages de la présente invention apparaîtront à la lecture de la description suivante d'un exemple particulier de réalisation, ladite description étant faite en relation avec les dessins joints dans lesquels :
- la figure 1 est un schéma fonctionnel d'une carte sans contact selon l'invention et de sa liaison de communication avec un lecteur de carte à puce sans contact,
- la figure 2 est un schéma fonctionnel d'un lecteur de carte à puce électronique sans contact mis en oeuvre avec les cartes selon l'invention.
- la figure 3 montre le format d'un message d'une commande APDU selon la norme ISO 7816-4,
- la figure 4 montre le format d'un message de réponse APDU selon la norme ISO 7816-4,
- la figure 5 montre le format d'un message d'une commande I-Block selon la norme ISO 14443-4,
- les figures 6a, 6b, 6c et 6d montrent les messages aux différentes étapes de communication,

Une carte à puce électronique sans contact 10 selon l'invention comprend fonctionnellement et schématiquement :
- un dispositif de communication 14 avec un lecteur de carte à puce électronique sans contact 12,
- un système d'exploitation 16 du type carte à puce électronique avec contacts, et
- une interface de conversion de protocole 18 entre le dispositif de communication 14 et le système d'exploitation 16.

La communication bidirectionnelle entre un lecteur de carte à puce électronique sans contact 12 et le dispositif de communication 14 s'effectue selon la norme ISO 14443-4.

La communication bidirectionnelle entre le dispositif de communication 14 et l'interface de conversion du protocole s'effectue de préférence sous forme logicielle sous le contrôle du dispositif de communication 14. Ce fonctionnement est schématisé par le rectangle en traits interrompus 50.

La communication bidirectionnelle entre l'interface de conversion du protocole 18 et le système d'exploitation 16 s'effectue selon la norme ISO 7816-4.

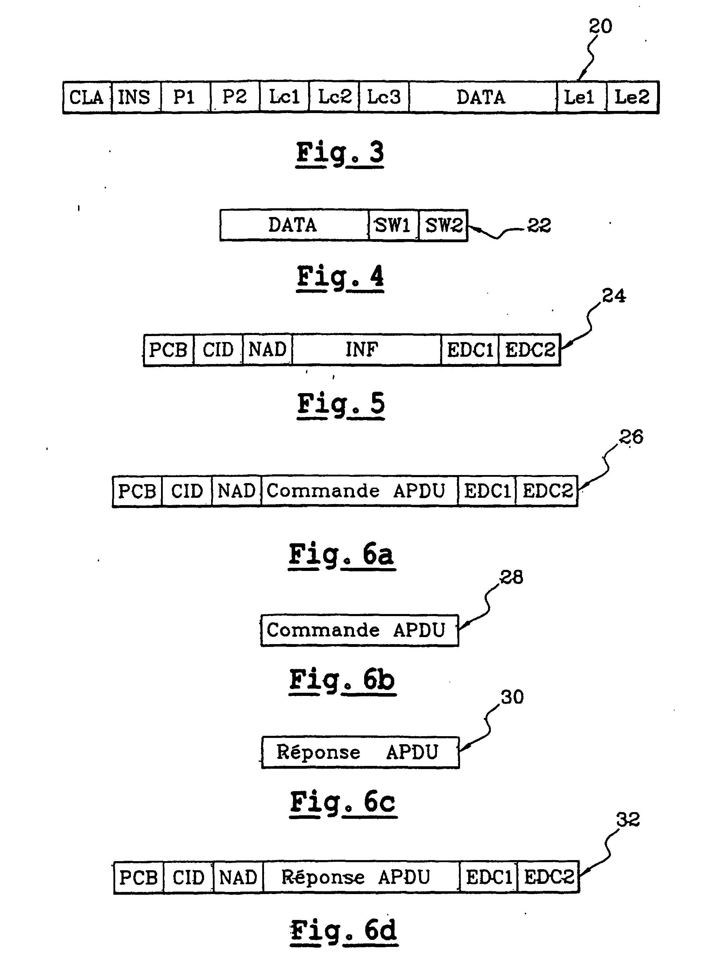

Le détail de ces communications bidirectionnelles sera décrit en relation avec les figures 3 à 6.

Dans la norme ISO 7816-4, les commandes APDU sont définies selon le format de message 20 suivant (figure 3) :
- une zone CLA indiquant la classe de la commande,
- une zone INS définissant l'instruction,
- deux zones P1 et P2 indiquant les paramètres de l'instruction,
- trois zones Lc1, Lc2 et Lc3 indiquant la longueur des données contenues dans une zone suivante DATA,
- une zone DATA contenant les données, et
- deux zones Le1 et Le2 contenant le nombre d'octets à lire s'il s'agit d'une commande de lecture.

La longueur du message n'est pratiquement pas limitée dans une commande APDU car sa taille maximale est de 16 777 225 octets.

En réponse à cette commande APDU, le système d'exploitation 16 répond par un message ou réponse APDU 22 selon e format de la figure 4.

Cette réponse APDU 22 comprend :
- une zone DATA contenant les données, et
- deux zones SW1 et SW2 qui contiennent des octets d'états.

Dans la norme ISO 14443-4, les commandes dites I-Block sont définies selon le format de message 24 suivant (figure 5) :
- une zone PCB qui indique la nature du « Block » sachant qu'il existe en plus des I-Blocks pour les informations, des R-Blocks pour des accusés réception de message et des S-Blocks pour des indications de retard,
- une zone CID qui indique le numéro de la carte à traiter,
- une zone NAD qui indique le numéro de l'application,
- une zone INF pour,les données,
- une zone EDC1 et EDC2 pour une détection d'erreurs de transmission relatives aux chiffres binaires du message.

La longueur du message I-Block est de 256 octets mais si la longueur de la partie INF conduit à un message de plus de 256 octets, l'excédent est transmis par le ou les messages suivants.

Selon l'invention, le lecteur de carte à puce électronique sans contact envoie une commande APDU en l'insérant dans la partie INF du message de commande I-Block 24 (figure 5). Si la longueur disponible dans la partie INF n'est pas suffisante, la commande APDU est transmise en plusieurs messages successifs.

On obtient alors le message 26 de la figure 6a.

Le dispositif de communication 14 de la carte à puce électronique reçoit ce message et l'analyse selon la norme ISO 14443-4 pour isoler la partie INF.

L'interface de conversion du protocole 18 transfère la commande APDU 28 (figure 6b) vers le système d'exploitation 16 selon la norme ISO 7816-4.

Le système d'exploitation 16 traite cette commande APDU et y répond par une réponse APDU 30 (figure 6c) qui est transmise à l'interface de conversion du protocole 18 selon la norme ISO 7816-4.

L'interface 18 transforme cette réponse APDU en une commande I-Block 32 selon la norme ISO 14443-4 et la transmet au dispositif de communication 14 pour envoi au lecteur 12 selon la norme ISO 14443-4.

Le lecteur de carte à puce électronique sans contact (12) envoie des commandes APDU et reçoit des réponses APDU selon la norme ISO 14443-4.

Par ailleurs, pour préparer ces commandes APDU et analyser les réponses APDU, le lecteur 12 doit avoir un système d'exploitation du type lecteur de carte à puce électronique avec contacts qui communique selon la norme ISO 7816-4.

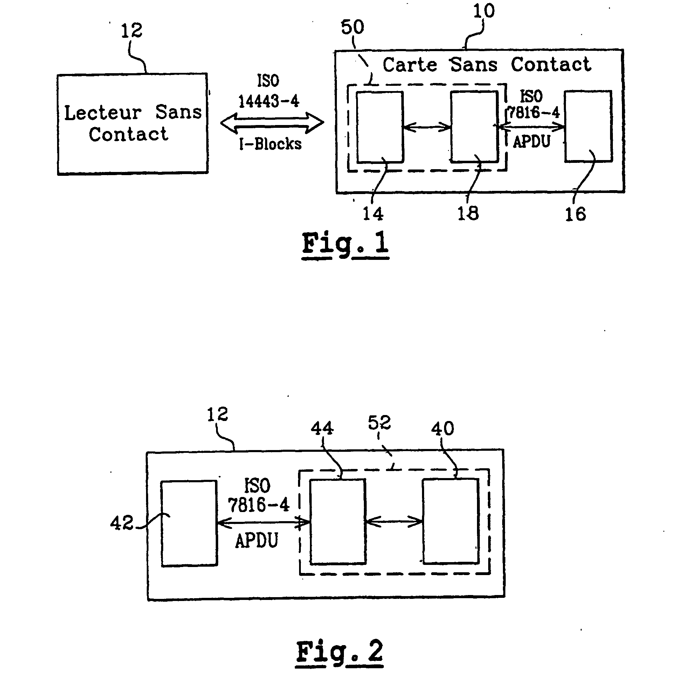

En conséquence, le lecteur 12 doit avoir une structure fonctionnelle analogue à celle de la carte à puce électronique 10, c'est-à-dire comprendre (figure 2) :
- un dispositif de communication 40 avec une pluralité de cartes à puce électronique sans contact fonctionnant selon la norme ISO 14443-4 en tant que lecteur,
- un système d'exploitation 42 du type carte à puce électronique avec contacts en tant que lecteur, et
- une interface de conversion de protocole 44 entre le dispositif de communication lecteur 40 et le système d'exploitation lecteur 42 pour établir une communication selon la norme ISO 7816-4.

Le dispositif de communication lecteur 40 est du type classique lui permettant de communiquer avec plusieurs cartes sans contact. L'interface de conversion du protocole 44 est analogue à celle 18 de la carte à puce 10 et est réalisée de préférence sous forme logicielle sous le contrôle du dispositif de communication 40, fonctionnement qui est schématisé par le rectangle en traits interrompus 52.

Le système d'exploitation 42 est du type pour carte à puce électronique avec contacts mais est adapté à traiter simultanément plusieurs cartes à puce électroniques sans contact.

La carte à puce électronique selon l'invention a été décrite avec une interface de conversion de protocole 18 sous le contrôle du dispositif de communication 14 ; cependant, l'invention peut aussi être mise en oeuvre avec une interface de conversion de protocole 18 sous le contrôle du système d'exploitation 16.

De même, dans le lecteur de carte à puce électronique sans contact 12, il a été décrit une interface de conversion de protocole 44 sous le contrôle du dispositif de communication sans contact 40 mais ce contrôle peut être aussi exercé par le système d'exploitation lecteur 42.

Grâce à l'invention telle que décrite ci-dessus, il est possible de réaliser une carte à puce sans contact en utilisant le système d'exploitation d'une carte à puce avec contacts associé à un dispositif de communication du type carte sans contact et en effectuant une conversion ou transposition de protocole entre le système d'exploitation et le dispositif de communication. Cela évite d'avoir à réaliser un nouveau système d'exploitation adapté à la norme de communication pour les cartes sans contact.

De manière analogue, le lecteur à distance de ces nouvelles cartes à puce sans contact utilise un système d'exploitation pour cartes avec contacts combiné avec un dispositif de communication avec des cartes sans contact, une interface de conversion ou transposition étant disposée entre le système d'exploitation et le dispositif de communication du lecteur. En outre, le système d'exploitation pour cartes avec contacts doit comprendre des moyens pour traiter toutes cartes à puce électronique selon l'invention qui sont en communication avec le dispositif de communication (40) du lecteur.

## Revendications

1. Carte à puce électronique sans contact (10),comprenant :
- un dispositif de communication (14) avec un lecteur de carte à puce électronique sans contact (12) communiquant selon la norme ISO 14443-4, et
- un système d'exploitation (16) du type carte à puce électronique avec contacts communiquant par commande APDU et réponse APDU selon la norme ISO7816-4, le terme APDU est un acronyme de l'expression anglo-saxonne « Application Protocol Data unit» signifiant « unité de données du protocole d'application », et
- une interface de conversion de protocole (18) entre le dispositif de communication (14) et le système d'exploitation (16),
ladite carte étant **caractérisée en ce que** les messages de commande APDU et de réponse APDU selon la norme ISO 7816-4 sont transmis entre le dispositif de communication (14) et le lecteur de carte à puce électronique selon un format de commande I-Block de la norme ISO 14443-4, la commande APDU ou la réponse APDU constituant la zone de données (INF) de la commande I-Block.

2. Carte selon la revendication 1, **caractérisée en ce que** l'interface de conversion de protocole (18) transmet, d'une part, la commande APDU vers le système d'exploitation (16) et, d'autre part, la réponse APDU du système d'exploitation vers le dispositif de communication (14).

3. Carte selon la revendication 1 ou 2, **caractérisée en ce que** l'interface de conversion du protocole (18) est sous forme logicielle sous le contrôle du dispositif de communication (14).

4. Carte selon la revendication 1 ou 2, **caractérisée en ce que** l'interface de conversion du protocole (18) est sous forme logicielle sous le contrôle du système d'exploitation (16).

5. Lecteur de carte à puce électronique sans contact selon l'une des revendications précédentes 1 à 4, comprenant:
- un dispositif de communication (40) avec une pluralité de cartes à puce sans contact fonctionnant selon la norme ISO 14443-4 en tant que lecteur,
- un système d'exploitation (42) pour carte à puce électronique avec contacts en tant que lecteur, et
- une interface de conversion de protocole (44) entre le dispositif de communication lecteur (40) et le système d'exploitation lecteur (42) pour établir une communication selon la norme ISO 7816-4, les messages de commande APDU et de réponse APDU selon la norme ISO 7816-4 étant transmis entre le dispositif de communication (40) et les cartes à puces selon un format de commande I-Block de la norme ISO 14443-4 la commande APDU ou la réponse APDU constituant la zone de données (INF) de la commande I-Block.

6. Lecteur selon la revendication 5, **caractérisé en ce que** l'interface du protocole (44) est sous forme logicielle sous le contrôle du dispositif de communication (40) du lecteur.

7. Lecteur selon la revendication 5, **caractérisé en ce que** l'interface de conversion du protocole (44) est sous forme logicielle sous le contrôle du système d'exploitation (42) du lecteur.

8. Lecteur selon la revendication 5, **caractérisé en ce que** le système d'exploitation comprend des moyens pour traiter plusieurs cartes à puce électronique en communication avec le dispositif de communication (40) du lecteur.

## Patentansprüche

1. Kontaktlose elektronische Chipkarte, umfassend:
- eine Kommunikationsvorrichtung (14) mit einer Lesevorrichtung für kontaktlose elektronische Chipkarten (12), die gemäß der ISO-Norm 14443-4 kommuniziert und
- ein System zur Auswertung (16) von elektronischen Chipkarten der Bauart mit Kontakten, das durch Kommando-APDU und Antwort-APDU gemäß der ISO-Norm 7816-4 kommuniziert, wobei der Ausdruck APDU die Abkürzung des englischen Ausdrucks "Application Protocol Data Unit" mit der Bedeutung "Anwendungsprotokoll-Dateneinheit" ist und
- eine Protokollumwandlungsschnittstelle (18) zwischen der Kommunikationsvorrichtung (14) und dem Auswertungssystem (16), wobei
die Karte **dadurch gekennzeichnet ist, daß** die Kommando-APDU-Meldungen und Antwort-APDU-Meldungen gemäß der ISO-Norm 7816-4 zwischen der Kommunikationsvorrichtung (14) und der Lesevorrichtung für elektronische Chipkarten gemäß einem Kommando-1-Block-Format der ISO-Norm 14443-4 übertragen werden, wobei die Kommando-APDU oder die Antwort-APDU die Datenzone (INF) des Kommando-I-Blocks bilden.

2. Karte nach Anspruch 1, **dadurch gekennzeichnet, daß** die Protokollumwandlungs-Schnittstelle (18) einerseits die Kommando-APDU zum Auswertungssystem (16) und andererseits die Antwort-APDU des Auswertungssystems zur Kommunikationsvorrichtung (14) sendet.

3. Karte nach Anspruch 1 oder 2, **dadurch gekennzeichnet, daß** die Protokollumwandlungs-Schnittstelle (18) in Form von Software unter der Kontrolle der Kommunikationsvorrichtung (14) vorliegt.

4. Karte nach Anspruch 1 oder 2, **dadurch gekennzeichnet, daß** die Protokollumwandlungs-Schnittstelle (18) in Form von Software unter der Kontrolle des Auswertungssystems (16) vorliegt.

5. Lesevorrichtung für kontaktlose elektronische Chipkarten, gemäß einem der vorhergehenden Ansprüche 1 bis 4, umfassend:
- eine Kommunikationsvorrichtung (40) mit mehreren kontaktlosen Chipkarten, die gemäß der ISO-Norm 14443-4 arbeitet, als Lesevorrichtung,
- ein Auswertungssystem (42) für eine elektronische Chipkarte mit Kontakten als Lesevorrichtung und
- eine Protokollumwandlungs-Schnittstelle (44) zwischen der Leserkommunikationsvorrichtung (40) und dem Leserauswertungssystem (40) zur Herstellung einer Kommunikation gemäß der ISO-Norm 7816-4, wobei die Kommando-APDU-Meldungen und Antwort-APDU-Meldungen gemäß der ISO-Norm 7816-4 zwischen der Kommunikationsvorrichtung (40) und den Chipkarten gemäß einem Kommando-I-Block-Format der ISO-Norm 14443-4 übertragen werden und die Kommando-APDU oder die Antwort-APDU die Datenzone (INF) des Kommando-I-Blocks bilden.

6. Lesevorrichtung nach Anspruch 5, **dadurch gekennzeichnet, daß** die Protokoll-Schnittstelle (44) in Form von Software unter der Kontrolle der Kommunikationsvorrichtung (40) der Lesevorrichtung vorliegt.

7. Lesevorrichtung nach Anspruch 5, **dadurch gekennzeichnet, daß** die Protokoll-Umwandlungsschnittstelle (44) in Form von Software unter der Kontrolle des Auswertungssystem (42) der Lesevorrichtung vorliegt.

8. Lesevorrichtung nach Anspruch 5, **dadurch gekennzeichnet, daß** das Auswertungssystem Mittel zur Behandlung mehrerer mit der Kommunikationsvorrichtung (40) der Lesevorrichtung kommunizierender elektronischer Chipkarten umfaßt.

## Claims

1. Contact-free electronic chip card (10) comprising:
- a device for communication(14) with a contact-free electronic chip card reader (12) communicating in compliance with the ISO 14443-4 standard, and,
- a contact type electronic chip card type operating system (16) communicating by APDU (Application Protocol Data Unit) command and response in compliance with the ISO 7816-4 standard, and
- a protocol conversion interface (18) between the communication device (14) and the operating system (16),
said card being **characterised in that** the APDU command and response messages in compliance with the ISO 7816-4 standard are transmitted between the communication device (14) and the electronic chip card reader in an I-Block format of the ISO 14443-4 standard, the APDU command or response forming the data zone (INF) of the I-Block command.

2. Card according to claim 1, **characterised in that** the protocol conversion interface (18) transmits on the one hand the APDU command to the operating system (16), and on the other hand, the APDU response from the operating system to the communication device (14).

3. Card according to claim 1 or 2 **characterised in that** the protocol conversion interface (18) is in the form of software controlled by the communication device (14).

4. Card according to claim 1 or 2, **characterised in that** the protocol conversion interface (18) is in the form of software controlled by the operating system (16).

5. Contact-free electronic chip card reader according to of any of the foregoing claims 1 to 4, comprising:
- a device for communication (40) with a number of contact-free chip cards operating in compliance with the ISO 14443-4 standard as a reader,
- an operating system (42) for contact type electronic chip cards as a reader, and
- a protocol conversion interface (44) between the reader communication device (40) and the reader operating system (42) to establish a communication in compliance with the ISO 7816-4 standard, the APDU command and response messages in compliance with the ISO 7816-4 standard being transmitted between the communication device (40) and the chip cards in an I-Block command format of the ISO 14443-4 standard, the APDU command or response forming the data zone (INF) of the I-Block command.

6. Reader according to claim 5, **characterised in that** the protocol interface (44) is in the form of software controlled by the reader communication device (40).

7. Reader according to claim 5, **characterised in that** the protocol conversion interface (44) is in the form of software controlled by the reader operating system (42).

8. Reader according to claim 5, **characterised in that** the operating system comprises means of processing several electronic chip cards in communication with the reader communication device (40).
